# EUROPEAN PATENT APPLICATION

(11) **EP 3 944 655 A1**
(43) Date of publication of application: **26.01.2022**
(21) Application number: 20779935.4
(22) Date of filing: 16.03.2020
(51) Int. Cl.: H04W 16/32, H04W 36/14, H04W 36/28, H04W 72/04, H04W 76/20

(54) **TERMINAL DEVICE, BASE STATION DEVICE, AND COMMUNICATION METHOD**

(30) Priority: 22.03.2019 JP 2019054831
(71) Applicant: Sharp Kabushiki Kaisha, Sakai-shi Osaka 590-8522 (JP); FG Innovation Company Limited, Hong Kong (CN)
(72) Inventor: HORI Takako, Sakai City, Osaka 590-8522 (JP); YAMADA Shohei, Sakai City, Osaka 590-8522 (JP); TSUBOI Hidekazu, Sakai City, Osaka 590-8522 (JP)
(74) Representative: Müller Hoffmann & Partner
(86) International application number: PCT/JP2020/011372
(87) International publication number: WO 2020/196008

(57) **Abstract**

A terminal apparatus communicating with a base station apparatus comprises a reception unit and a processing unit. The reception unit is configured to receive an RRC connection reconfiguration message from the base station apparatus. The processing unit is configured to establish an NR PDCP for an SRB identifier included in the RRC connection reconfiguration message based on information that is included in the RRC connection reconfiguration message and indicates that a full configuration is applied and based on an inter-system handover performed by the terminal apparatus from an UTRA or an EPC to an E-UTRA or a 5GC.

## Description

### CROSS-REFERENCE TO RELATED APPLICATION

The present application claims priority based on Japanese Patent Application No. 2019-054831 filed on March 22, 2019, the content of which is incorporated herein by reference.

### FIELD

The present invention relates to a terminal apparatus, a base station apparatus, and a communication method.

### BACKGROUND

A radio access scheme and a wireless network for cellular mobile communication (hereinafter, referred to as "Long Term Evolution (LTE: registered trademark)" or "Evolved Universal Terrestrial Radio Access: EUTRA") and a core network (hereinafter, "Evolved Packet Core: EPC") have been studied and discussed in the 3rd Generation Partnership Project (3GPP).

In addition, as a radio access scheme and a radio network technology for a 5th generation cellular system, technical studies and standardization for LTE-Advanced Pro, which is an enhanced technology of LTE, and New Radio technology (NR), which is a new radio access technology, have been conducted by the 3GPP (NPL 1). Further, a 5th Generation Core Network (5GC), which is a core network for a 5th generation cellular system, has also been studied (NPL 2).

### Prior Art Literature

### Non-Patent Literature

NPL 1: 3GPP RP-170855, "Work Item on New Radio (NR) Access Technology"
NPL 2: 3GPP TS 23.501 v15.3.0, "System Architecture for the 5G System; Stage 2"
NPL 3: 3GPP TS 36.300 v15.3.0, "Evolved Universal Terestrial Radio Access (E-UTRA) and Evolved Universal Terestrial Radio Access Network (E-UTRAN); Overview Description; Stage 2"
NPL 4: 3GPP TS 36.331 v15.4.0, "Evolved Universal Terestrial Radio Access (E-UTRA); Radio Resource Control (RRC); Protocol specifications"
NPL 5: 3GPP TS 36.323 v15.3.0, "Evolved Universal Terestrial Radio Access (E-UTRA); Packet Data Convergence Protocol (PDCP) specification"
NPL 6: 3GPP TS 36.322 v15.3.0, "Evolved Universal Terestrial Radio Access (E-UTRA); Radio Link Control (RLC) protocol specification"
NPL 7: 3GPP TS 36.321 v15.3.0, "Evolved Universal Terestrial Radio Access (E-UTRA); Medium Access Control (MAC) protocol specification"
NPL 8: 3GPP TS 37.340 v15.3.0, "Evolved Universal Terestrial Radio Access (E-UTRA) and NR; Multi-Connectivity; Stage 2"
NPL 9: 3GPP TS 38.300 v15.3.0, "NR; NR and NG-RAN Overview Description; Stage 2"
NPL 10: 3GPP TS 38.331 v15.4.0, "NR; Radio Resource Control (RRC); Protocol specifications"
NPL 11: 3GPP TS 38.323 v15.3.0, "NR; Packet Data Convergence Protocol (PDCP) specification"
NPL 12: 3GPP TS 38.322 v15.3.0, "NR; Radio Link Control (RLC) protocol specification"
NPL 13: 3GPP TS 38.321 v15.3.0, "NR; Medium Access Control (MAC) protocol specification"
NPL 14: 3GPP TS 23.401 v15.0.0, "General Packet Radio Service (GPRS) enhancements for Evolved Universal Terrestrial Radio Access Network (E-UTRAN) access"
NPL 15: 3GPP TS 23.502 v15.3.0, "Procedure for 5G System; Stage 2"
NPL 16: 3GPP TS 37.324 v15.1.0, "NR; Service Data Adaptation Protocol (SDAP) specification"
NPL 17: 3GPP RP-161266, "5G Architecture Options-Full Set"

### SUMMARY

### Technical Problem

As one of technical studies for NR, the following architectures are being studied: an architecture in which E-UTRA connects to 5GC, an architecture in which NR connects to 5GC, and an architecture related to a mechanism (MR-DC: Multi-RAT Dual Connectivity or Multi-Radio Dual Connectivity) in which cells of both E-UTRA and NR RATs (Radio Access Technologies) are grouped into cell groups for each RAT and assigned to the UE and in which a terminal apparatus communicates with one or more base station apparatus (NPL 17).

However, there is a problem that since the formats and functions of the communication protocol used in each architecture are different, and the core networks used are different, the protocol processing for the movement (handover) to a network with a different architecture while continuing communication, compared to the movement within the conventional LTE, becomes complicated, so that communication between the base station apparatus and the terminal apparatus cannot be performed efficiently.

One aspect of the present invention has been made in view of the above circumstances, and one of objectives of the present invention is to provide a terminal apparatus capable of efficiently communicating with a base station apparatus, a base station apparatus, a method used for the terminal apparatus, and an integrated circuit mounted in the terminal apparatus.

### Solution to Problem

In order to achieve the above objective, one aspect of the present invention provides a terminal apparatus communicating with a base station apparatus, and the terminal apparatus comprises a reception unit and a processing unit. The reception unit is configured to receive an RRC connection reconfiguration message from the base station apparatus. The processing unit is configured to establish an NR PDCP for an SRB identifier included in the RRC connection reconfiguration message based on information that is included in the RRC connection reconfiguration message and indicates that a full configuration is applied and based on an inter-system handover performed by the terminal apparatus from an UTRA or an EPC to an E-UTRA or a 5GC.

In addition, one aspect of the present invention provides a base station communicating with a terminal apparatus, and the base station comprises a transmission unit and a processing unit. The transmission unit is configured to transmit an RRC connection reconfiguration message to the terminal apparatus. The processing unit is configured to cause the terminal apparatus to perform processing by including information indicating that a full configuration is applied in the RRC connection reconfiguration message, where the processing includes a process of establishing an NR PDCP for an SRB identifier included in the RRC connection reconfiguration message based on information that is included in the RRC connection reconfiguration message and indicates that the full configuration is applied and based on an inter-system handover performed by the terminal apparatus from an UTRA or an EPC to an E-UTRA or a 5GC.

In addition, one aspect of the present invention provides a communication method for a terminal apparatus communicating with a base station apparatus, and a computer of the terminal apparatus comprises a reception process and a processing process. The reception process is performed to receive an RRC connection reconfiguration message from the base station apparatus. The processing process is performed to establish an NR PDCP for an SRB identifier included in the RRC connection reconfiguration message based on information that is included in the RRC connection reconfiguration message and indicates that a full configuration is applied and based on an inter-system handover performed by the terminal apparatus from an UTRA or an EPC to an E-UTRA or a 5GC.

In addition, one aspect of the present invention provides a method for a base station communicating with a terminal apparatus, and a computer of the base station apparatus comprises a transmission process and a processing process. The transmission process is performed to transmit an RRC connection reconfiguration message to the terminal apparatus. The processing process is performed to cause the terminal apparatus to perform processing by including information indicating that a full configuration is applied in the RRC connection reconfiguration message, where the processing includes a process of establishing an NR PDCP for an SRB identifier included in the RRC connection reconfiguration message based on information that is included in the RRC connection reconfiguration message and indicates that the full configuration is applied and based on an inter-system handover performed by the terminal apparatus from an UTRA or an EPC to an E-UTRA or a 5GC.

In addition, these comprehensive or specific aspects may be implemented in a system, an apparatus, a method, an integrated circuit, a computer program, or a recording medium, or may be implemented in any combination of a system, an apparatus, a method, an integrated circuit, a computer program, and a recording media.

### Invention Effect

According to one aspect of the present invention, the terminal apparatus can reduce the complexity of protocol processing and perform communication efficiently.

### BRIEF DESCRIPTION OF THE DRAWINGS

FIG. 1 is a schematic view illustrating an example of a communication system according to each embodiment of the present invention.
FIG. 2A is a diagram illustrating an example of a protocol stack of UP and CP of a terminal apparatus and a base station apparatus in E-UTRA according to each embodiment of the present invention.
FIG. 2B is a diagram illustrating an example of a protocol stack of UP and CP of a terminal apparatus and a base station apparatus in E-UTRA according to each embodiment of the present invention.
FIG. 3A is a diagram illustrating an example of a protocol stack of UP and CP of a terminal apparatus and a base station apparatus in NR according to each embodiment of the present invention.
FIG. 3B is a diagram illustrating an example of a protocol stack of UP and CP of a terminal apparatus and a base station apparatus in NR according to each embodiment of the present invention.
FIG. 4 is a diagram illustrating an example of a flow of a procedure for various configurations in an RRC 208 and/or an RRC 308 in each embodiment of the present invention.
FIG. 5 is a block diagram illustrating an example of a configuration of a terminal apparatus according to each embodiment of the present invention.
FIG. 6 is a block diagram illustrating an example of a configuration of a base station apparatus according to each embodiment of the present invention.
FIG. 7 is an example of an ASN.1 description included in a message related to an RRC connection reconfiguration in NR according to an embodiment of the present invention.
FIG. 8 is an example of an ASN.1 description included in a message related to an RRC connection reconfiguration in E-UTRA according to an embodiment of the present invention.
FIG. 9 is an example of a processing method of a UE 122 according to an embodiment of the present invention.
FIG. 10 is a second example of a processing method of a UE 122 according to an embodiment of the present invention.
FIG. 11 is a third example of a processing method of a UE 122 according to an embodiment of the present invention.

### DETAILED DESCRIPTION OF THE PREFERRED EMBODIMENTS

Hereinafter, embodiments of the present invention will be described in detail with reference to the accompanying drawings.

LTE (and LTE-A Pro) and NR may be defined as different RATs. Further, NR may be defined as a technology included in LTE. LTE may be defined as a technology included in NR. Further, LTE that can be connected to NR by Multi Radio Dual connectivity may be distinguished from conventional LTE. Further, LTE having a core network of 5GC may be distinguished from conventional LTE having a core network of EPC. The present embodiment may be applied to NR, LTE and other RATs.

Although the following description uses terms associated with LTE and NR, it may be applied to other technologies using other terms. Further, the term E-UTRA in the present embodiment may be replaced with the term LTE, and the term LTE may be replaced with the term E-UTRA.

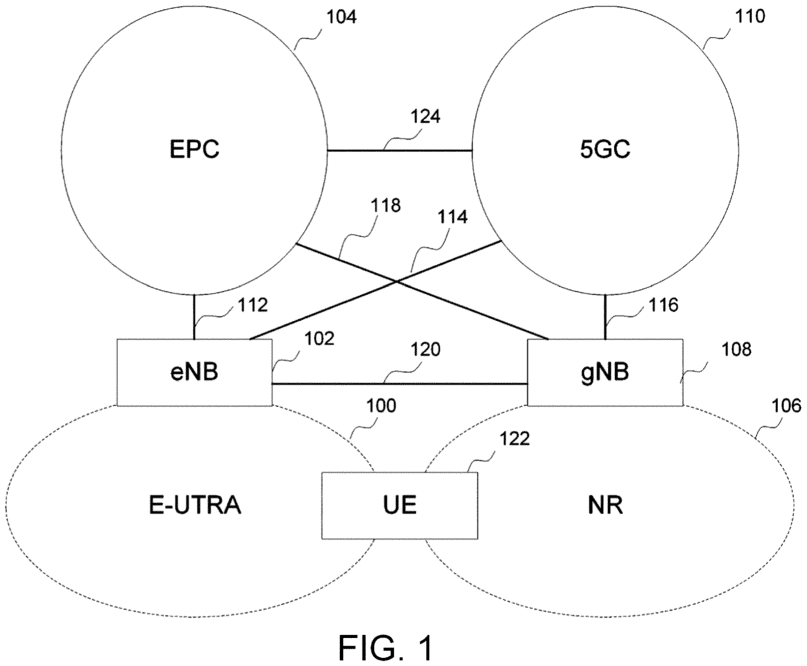

FIG. 1 is a schematic view of a communication system according to each embodiment of the present invention.

E-UTRA 100 is a wireless access technology described in NPL 3 and the like, and includes a Cell Group (CG) with one or a plurality of frequency bands included. eNB (E-UTRAN Node B) 102 is a base station apparatus of the E-UTRA 100. EPC (Evolved Packet Core) 104 is a core network described in NPL 14 and the like, and is designed as a core network for E-UTRA. An interface 112 is an interface between the eNB 102 and the EPC 104, where there are a Control Plane (CP) through which a control signal passes and a User Plane (UP) through which user data passes.

NR 106 is a wireless access technology described in NPL 9 and the like, and includes a Cell Group (CG) with one or a plurality of frequency bands included. gNB (g Node B) 108 is a base station apparatus of the NR 106. 5GC 110 is a core network described in NPL 2 and the like, and is designed as a core network for the NR 106 but may also be used as a core network for the E-UTRA 100 having a function of connecting to the 5GC 110. Hereinafter, the E-UTRA 100 may include E-UTRA 100 having a function of connecting to the 5GC 110.

An interface 114 is an interface between the eNB 102 and the 5GC 110, an interface 116 is an interface between the gNB 108 and the 5GC 110, an interface 118 is an interface between the gNB 108 and the EPC 104, an interface 120 is an interface between the eNB 102 and the gNB 108, and an interface 124 is an interface between the EPC 104 and the 5GC 110. The interface 114, the interface 116, the interface 118, the interface 120, the interface 124, and the like are interfaces through which only the CP passes, or only the UP passes, or both the CP and the UP pass. Further, the interface 114, the interface 116, the interface 118, the interface 120, the interface 124, and the like may not exist depending on communication systems provided by telecommunication operators.

UE 122 is a terminal apparatus that corresponds to any or all of the E-UTRA 100 and the NR 106. As described in any or all of NPL 3 and NPL 9, when the UE 122 connects to a core network via any or all of the E-UTRA 100 and the NR 106, a logical path referred to as a radio bearer (RB: Radio Bearer) is established between the UE 122 and any or all of the E-UTRA 100 and the NR106. The radio bearer used for the CP is referred to as a signaling radio bearer (SRB), and the radio bearer used for the UP is referred to as a data radio bearer (DRB). Each RB is assigned an RB identifier (RB Identity or RB ID) and is uniquely identified. An RB identifier for SRB is referred to as an SRB identifier (SRB Identity or SRB ID), and an RB identifier for DRB is referred to as a DRB identifier (DRB Identity or DRB ID).

As described in NPL 3, when a core network to which the UE 122 is connected is the EPC 104, each DRB established between the UE 122 and any or all of the E-UTRA 100 and the NR 106 is further uniquely associated with each EPS (Evolved Packet System) bearer via the EPC 104. Each EPS bearer is assigned an EPS bearer identifier (Identity or ID) and is uniquely identified. In addition, the same QoS is guaranteed for data passing through the same EPS bearer.

As described in NPL 9, when a core network to which the UE 122 is connected is the 5GC 110, one or more DRBs established between the UE 122 and any or all of the E-UTRA 100 and the NR 106 are further associated with one of PDU (Packet Data Unit) sessions established within the 5GC 110. One or more QoS flows exist in each PDU session. Each DRB may be mapped to one or more QoS flows existing in an associated PDU session or may not correspond to any QoS flow. Each PDU session is identified by a PDU session identifier (Identity or ID). Each QoS flow is identified by a QoS flow identifier. In addition, the same QoS is guaranteed for data passing through the same QoS flow.

The EPC 104 does not have any or all of PDU sessions and QoS flows, and the 5GC 110 does not have any EPS bearers. In other words, when the UE 122 is connected to the EPC 104, the UE 122 has information of the EPS bearer, and when the UE 122 is connected to the 5GC 110, the UE 122 has some or all of information in the PDU session and the QoS flow.

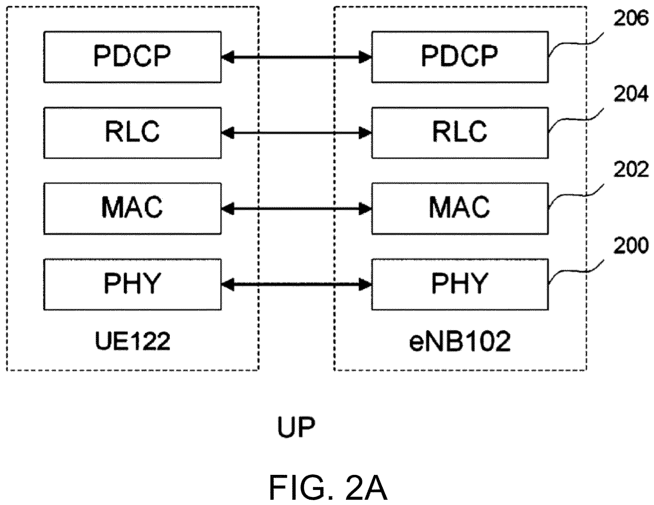

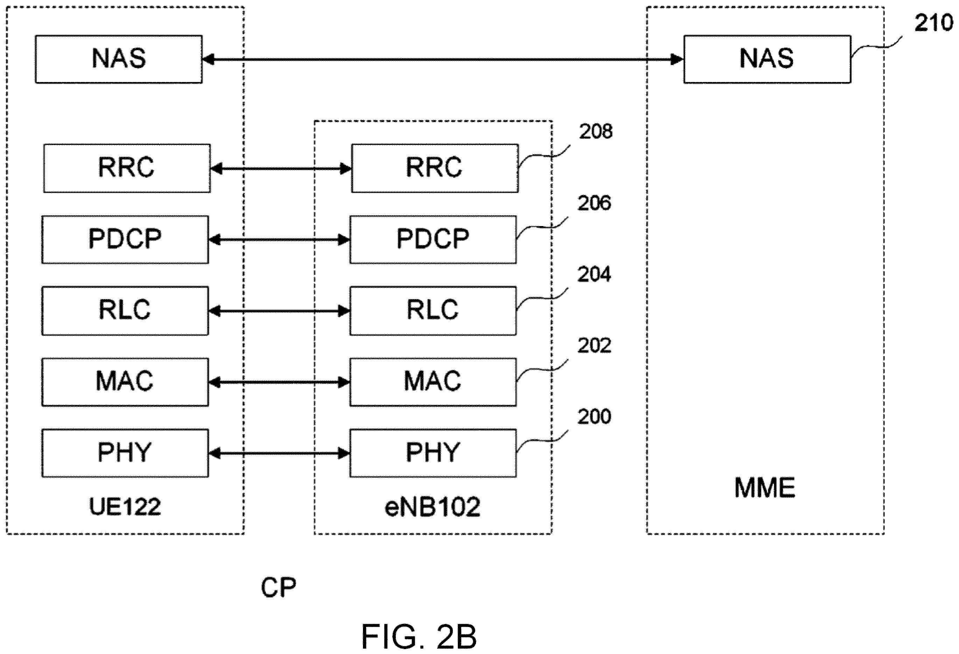

FIG. 2A and FIG. 2B are diagrams of protocol stacks of UP and CP of a terminal apparatus and a base station apparatus in an E-UTRA radio access layer according to each embodiment of the present invention.

FIG. 2A is a diagram of a protocol stack of UP used when the UE 122 communicates with the eNB 102 in the E-UTRA 100.

PHY (Physical layer) 200 is a radio physical layer and provides a transmission service to a higher layer by using a physical channel. The PHY 200 is connected with a higher layer MAC (Medium Access Control layer) 202, which will be described below, via a transport channel. Data transfers between the MAC 202 and the PHY 200 via the transport channel. Data is transmitted and/or received between the PHY of the UE 122 and the PHY of the eNB 102 via a radio physical channel.

The MAC 202 is a Medium Access Control layer that maps various logical channels to various transport channels. The MAC 202 is connected with a higher layer RLC (Radio Link Control layer) 204, which will be described below, via a logical channel. The logical channels are roughly classified depending on the types of information to be transmitted and are classified into control channels for transmitting control information and traffic channels for transmitting user information. The MAC 202 has a function of controlling the PHY 200 in order to perform Discontinuous Reception and Transmission (DRX/DTX), a function of performing a Random Access procedure, a function of reporting transmission power information, a function of performing HARQ control, and the like (NPL 7).

The RLC 204 is a Radio Link Control layer that segments the data received from a higher layer PDCP (Packet Data Convergence Protocol Layer) 206, which will be described below, and adjusts the data size so that a lower layer can appropriately transmit the data. Further, the RLC 200 also has a function of ensuring Quality of Service (QoS) required by each piece of data. That is, the RLC 204 has functions such as data retransmission control (NPL 6).

The PDCP 206 is a Packet Data Convergence Protocol layer for efficiently transmitting an IP Packet, which is user data, in a radio segment. The PDCP 206 may have a header compression function for compressing unnecessary control information. Further, the PDCP 206 may also have a data encryption function (NPL 5).

In addition, the data processed in the MAC 202, the RLC 204, and the PDCP 206 are referred to as a MAC PDU (Protocol Data Unit), an RLC PDU, and a PDCP PDU, respectively. In addition, the data transferred from the higher layer to the MAC 202, the RLC 204, and the PDCP 206 or data transferred to the higher layer are referred to as a MAC SDU (Service Data Unit), an RLC SDU, and a PDCP SDU, respectively.

FIG. 2B is a diagram of a protocol stack of CP used when the UE 122 communicates with the eNB 102 and an MME (Mobility Management Entity), which is a logical node that provides functions such as authentication and mobility management, in the E-UTRA 100.

In addition to the PHY 200, the MAC 202, the RLC 204, and the PDCP 206, there are RRC (Radio Resource Control layer) 208 and NAS (Non-Access Stratum) 210 existing in the protocol stack of CP. The RRC 208 is a radio link control layer that configures handover and measurement in addition to performing processing such as establishment, reestablishment, suspension, and resumption of an RRC connection, an RRC connection reconfiguration, e.g., configurations such as establishment, modification, release, and the like of a Radio Bearer (RB) and a Cell Group, and control of logical channels, transport channels, physical channels, and the like. The RBs may be classified into a Signaling Radio Bearer (SRB) and a Data Radio Bearer (DRB), and the SRB may be used as a path for transmitting an RRC message that is control information. The DRB may be used as a path for transmitting user data. Each RB may be configured between the RRC 208 of the eNB 102 and the RRC 208 of the UE 122. In addition, a portion of RB constituted by the RLC 204 and the MAC 202 may be referred to as an RLC bearer (NPL 4). In addition, for the NAS layer that carries signals between the MME and the UE 122, some or all layers of the PHY 200, the MAC 202, the RLC 204, the PDCP 206, and the RRC 208 that carry signals and data between the UE 122 and the eNB 102 may be referred to as AS (Access Stratum) layers.

The above-mentioned functional classification of the MAC 202, the RLC 204, the PDCP 206, and the RRC 208 may be an example, and some or all of the functions may not be implemented. In addition, some or all of the functions of each layer may be included in another layer.

Further, an IP layer, and a TCP (Transmission Control Protocol) layer, a UDP (User Datagram Protocol) layer, an application layer, and the like above the IP layer are higher layers (not shown) of the PDCP layer. In addition, the RRC layer and the NAS (Non-Access Strarum) layer are also higher layers (not shown) of the PDCP layer. In other words, the PDCP layer is a lower layer of the RRC layer, the NAS layer, the IP layer, and the TCP (Transmission Control Protocol) layer, the UDP (User Datagram Protocol) layer, and the application layer above the IP layer.

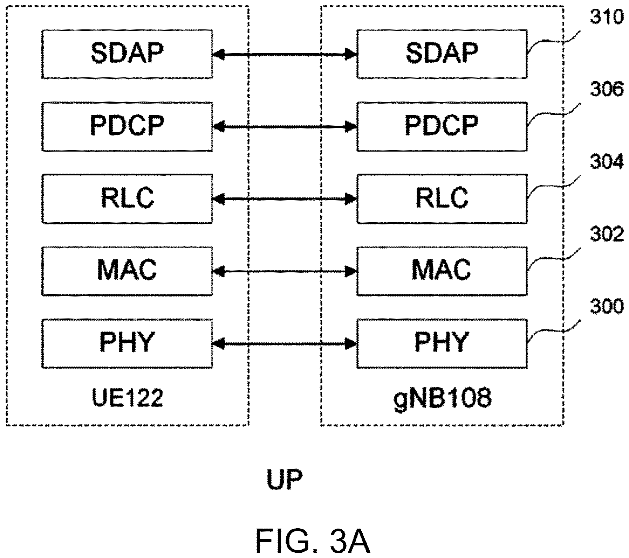

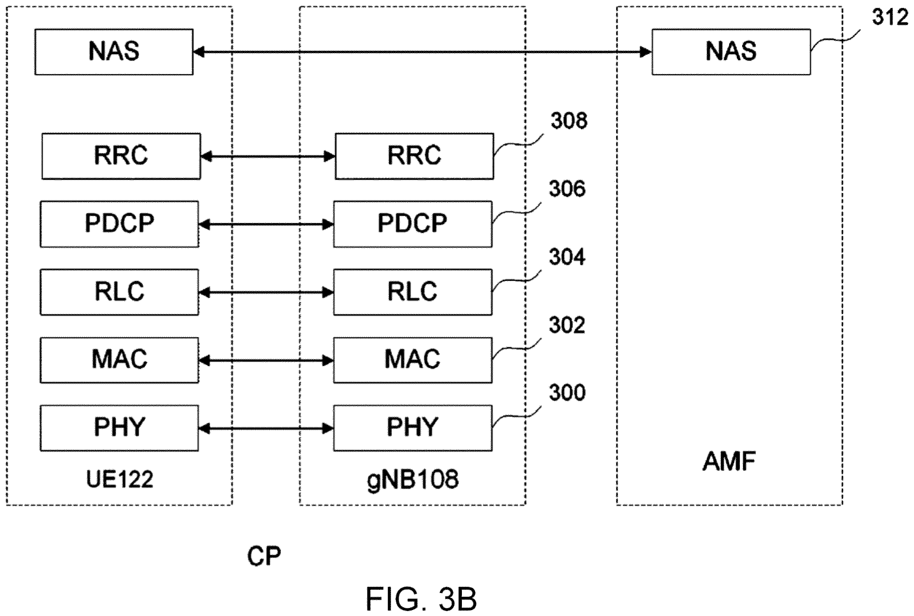

FIG. 3A and FIG. 3B are diagrams of protocol stacks of UP and CP of a terminal apparatus and a base station apparatus in an NR radio access layer according to each embodiment of the present invention.

FIG. 3A is a diagram of a protocol stack of UP used when the UE 122 communicates with the gNB 108 in the NR 106.

PHY (Physical layer) 300 is a radio physical layer and may provide a transmission service to a higher layer by using a physical channel. The PHY 300 may be connected with a higher layer MAC (Medium Access Control layer) 302, which will be described below, via a transport channel. Data may transfer between the MAC 302 and the PHY 300 via the transport channel. Data may be transmitted and/or received between the PHY of the UE 122 and the PHY of the gNB 108 via a radio physical channel.

The MAC 302 is a Medium Access Control layer that maps various logical channels to various transport channels. The MAC 302 may be connected with a higher layer RLC (Radio Link Control layer) 304, which will be described below, via a logical channel. The logical channels may be roughly classified depending on the types of information to be transmitted and may be classified into control channels for transmitting control information and traffic channels for transmitting user information. The MAC 302 may have a function of controlling the PHY 300 in order to perform Discontinuous Reception and Transmission (DRX/DTX), a function of performing a Random Access procedure, a function of reporting transmission power information, a function of performing HARQ control, and the like (NPL 13).

The RLC 304 is a Radio Link Control layer that segments the data received from a higher layer PDCP (Packet Data Convergence Protocol Layer) 206, which will be described below, and adjusts the data size so that a lower layer can appropriately transmit the data. Further, the RLC 304 may also have a function of ensuring Quality of Service (QoS) required by each piece of data. In other words, the RLC 304 may have functions such as data retransmission control (NPL 12).

The PDCP 306 is a Packet Data Convergence Protocol layer that efficiently transmits an IP Packet, which is user data, in a radio segment. The PDCP 306 may have a header compression function for compressing unnecessary control information. Further, the PDCP 306 may also have a data encryption function (NPL 11).

SDAP (Service Data Adaptation Protocol) 310 is a Service Data Adaptation Protocol layer that has functions of mapping a DRB to a downlink QoS flow transmitted from the 5GC 110 to a terminal apparatus via a base station apparatus, mapping a DRB to an uplink QoS flow transmitted from a terminal apparatus to the 5GC 110 via a base station apparatus, and storing mapping rule information (NPL 16).

FIG. 3B is a diagram of a protocol stack of CP used when the UE 122 communicates with the gNB 108 and an AMF (Access and Mobility Management function), which is a logical node that provides functions such as authentication and mobility management, in the NR 106.

In addition to the PHY 300, the MAC 302, the RLC 304, and the PDCP 306, there are RRC (Radio Resource Control layer) 308 and NAS (Non-Access Stratum) 310 existing in the protocol stack of CP. The RRC 308 is a radio link control layer that configures handover and measurement in addition to performing processing such as establishment, reestablishment, suspension, and resumption of an RRC connection, an RRC connection reconfiguration, e.g., configurations such as establishment, modification, release, and the like of a Radio Bearer (RB) and a Cell Group, and control of logical channels, transport channels, physical channels, and the like. The RBs may be classified into a Signaling Radio Bearer (SRB) and a Data Radio Bearer (DRB), and the SRB may be used as a path for transmitting an RRC message that is control information. The DRB may be used as a path for transmitting user data. Each RB may be configured between the RRC 308 of the gNB 108 and the RRC 308 of the UE 122. In addition, a portion of RB constituted by the RLC 304 and the MAC 302 may be referred to as an RLC bearer (NPL 10). In addition, for the NAS layer that carries signals between the AMF and the UE 122, some or all layers of the PHY 300, the MAC 302, the RLC 304, the PDCP 306, the RRC 308, and the SDAP 310 that carry signals and data between the UE 122 and the gNB 108 may be referred to as AS (Access Stratum) layers.

The above-mentioned functional classification of the MAC 302, the RLC 304, the PDCP 306, the SDAP 310, and the RRC 308 may be an example, and some or all of the functions may not be implemented. In addition, some or all of the functions of each layer may be included in another layer.

Further, an IP layer, and a TCP (Transmission Control Protocol) layer, a UDP (User Datagram Protocol) layer, an application layer, and the like above the IP layer are higher layers (not shown) of any one or all of the SDAP layer and the PDCP layer. In addition, the RRC layer and the NAS (Non-Access Strarum) layer are also higher layers (not shown) of any one or all of the SDAP layer and the PDCP layer. In other words, any one or all of the SDAP layer and the PDCP layer are lower layers of any one or all of the RRC layer, the NAS layer, the IP layer, and the TCP (Transmission Control Protocol) layer, the UDP (User Datagram Protocol) layer, and the application layer above the IP layer.

Further, in each embodiment of the present invention, any one or all of SIP (Session Initiation Protocol), SDP (Session Description Protocol), etc. used in IMS, RTP (Real-time Transport Protocol), RTCP (Real-time Transport Control Protocol), HTTP (HyperText Transfer Protocol), etc. used for media communication or media communication control, and code codes of various media, etc. should belong to an application layer.

Further, each layer belonging to the AS layer configured in any one or all of the terminal apparatus and the base station apparatus or the function of each layer may be referred to as an entity. That is, the MAC layer, the RLC layer, the PDCP layer, the SDAP layer, and the RRC layer configured in any one or all of the terminal apparatus and the base station apparatus or the function of each layer may be referred to as a MAC entity, an RLC entity, a PDCP entity, an SDAP entity, and an RRC entity, respectively.

Further, in each embodiment of the present invention, in order to distinguish an E-UTRA protocol from an NR protocol below, the MAC 202, the RLC 204, the PDCP 206, and the RRC 208 may also be sometimes referred to as a MAC for E-UTRA or a MAC for LTE, an RLC for E-UTRA or an RLC for LTE, a PDCP for E-UTRA or a PDCP for LTE, and an RRC for E-UTRA or an RRC for LTE, respectively. Further, the MAC 302, the RLC 304, the PDCP 306, and the RRC 308 may also be referred to as a MAC for NR, an RLC for NR, an RLC for NR, and an RRC for NR, respectively. Alternatively, they may also be described as, for example, E-UTRA PDCP, LTE PDCP, NR PDCP, etc. by using a space.

In addition, as shown in FIG. 1, the eNB 102, the gNB 108, the EPC 104, and the 5GC 110 may be connected via the interface 112, the interface 116, the interface 118, the interface 120, and the interface 114. Therefore, the RRC 208 of FIG. 2 may be replaced with the RRC 308 of FIG. 3 in order to support various communication systems. In addition, the PDCP 206 of FIG. 2 may also be replaced with the PDCP 306 of FIG. 3. In addition, the RRC 308 of FIG. 3 may include the function of the RRC 208 of FIG. 2. In addition, the PDCP 306 of FIG. 3 may be the PDCP 206 of FIG. 2. Further, in the E-UTRA 100, the NR PDCP may be used as the PDCP even when the UE 122 communicates with the eNB 102.

Next, the state transition of the UE 122 in LTE and NR will be described. The UE 122 connected to the EPC may be in an RRC_CONNECTED state when an RRC connection has been established. In addition, the UE 122 may be in an RRC_INACIVE state (if the UE 122 is connected to the 5GC) when the RRC connection is dormant. If not in those cases, the UE 122 may be in an RRC_IDLE state.

Further, the UE 122 connected to the EPC does not have the RRC_INACIVE state, but the dormancy of the RRC connection may be initiated by an E-UTRAN. In this case, when the RRC connection is dormant, the UE 122 retains a AS context of the UE and an identifier (resuming identity) used for resumption and transitions to the RRC_IDLE state. When the UE 122 retains the AS context of the UE, and the resumption of the RRC connection is permitted by the E-UTRAN, and the UE 122 needs to transition from the RRC_IDLE state to the RRC_CONNECTED state, the resumption of the dormant RRC connection may be initiated by a higher layer (e.g., NAS layer).

That is, the definition of dormancy may be different between the UE 122 connected to the EPC and the UE 122 connected to the 5GC. In addition, when the UE 122 is connected to the EPC (when it is dormant in the RRC_IDLE state), and when the UE 122 is connected to the 5GC (when it is dormant in the RRC_INACIVE state), all or some of procedures for the UEs 122 to resume from dormancy may be different.

Further, the RRC CONNECTED state, the RRC INACTIVE state, and the RRC_IDLE state may be referred to as a connected state (connected mode), an inactive state (inactive mode), and a dormant state (idle mode), respectively.

The AS context of the UE retained by the UE 122 may be information including all or a part of a current RRC configuration, a current security context, a PDCP state including a ROHC (RObust Header Compression) state, a C-RNTI used in a connection source PCell, a cell identifier (cell identity), and a physical cell identifier of the connection source PCell. Further, the AS context of the UE retained by any or all of the eNB 102 and the gNB 108 may include the same information as the AS context of the UE retained by the UE 122 or may include information different from the information included in the AS context of the UE retained by the UE 122.

The security context may be information including all or a part of an encryption key at an AS level, an NH (Next Hop parameter), an NCC (Next Hop Chaining Counter parameter) used to derive an access key for the next hop, an identifier of a selected encryption algorithm of the AS level, and a counter used for replay protection.

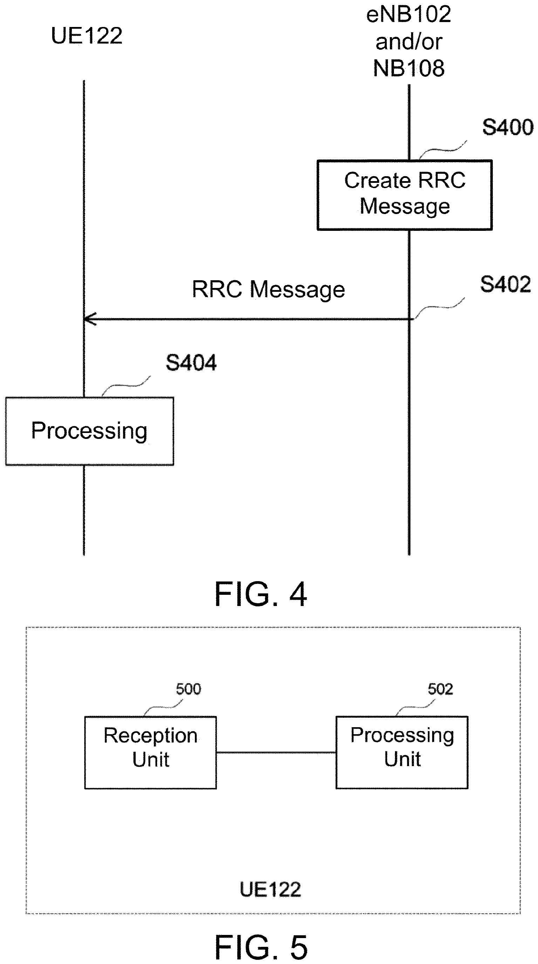

FIG. 4 is a diagram illustrating an example of a flow of a procedure for various configurations in the RRC 208 and/or the RRC 308 in each embodiment of the present invention. FIG. 4 is an example of a flow in a case that an RRC message is transmitted from a base station apparatus (eNB 102 and/or gNB 108) to a terminal apparatus (UE 122).

In FIG. 4, the base station apparatus creates an RRC message (step S400). The creation of the RRC message in the base station apparatus may be performed when the base station apparatus distributes broadcast information (SI: System Information) or paging information, or may be performed when the base station apparatus determines that it is necessary to perform processing on a specific terminal apparatus, for example, performing security related configuration, reconfiguring an RRC connection (performing radio bearer processing (establishment, modification, release, etc.), cell group processing (establishment, addition, modification, release, etc.), measurement configuration, handover configuration, etc.), releasing an RRC connection state, and the like. In addition, the RRC message can also be used for handover commands to different RATs. The RRC message includes information (parameters) for notifying and configuring various information. In the RRC related specifications such as NPL 4 or NPL 10, these parameters are referred to as fields and/or information elements and are described by using a description scheme referred to as ASN.1 (Abstract Syntax Notation One).

In FIG. 4, the base station apparatus then transmits the created RRC message to the terminal apparatus (step S402). Next, the terminal apparatus performs processing according to the received RRC message when it is necessary to perform processing such as performing configuration (step S404).

Further, the creation of the RRC message is not limited to the above examples but may also be done for other purposes as described in NPL 4 and NPL 10.

For example, the RRC message may be used for configurations related to Dual Connectivity (DC) or Multi-Radio Dual Connectivity (MR-DC) described in NPL 8.

Dual Connectivity (DC) may be a technology for performing data communication by using radio resources of both cell groups respectively composed of two base station apparatuses (nodes), that is, a master cell group (MCG) composed of master nodes (MNs) and a secondary cell group (SCG) composed of secondary nodes (SNs). In addition, the MR-DC described in NPL 8 may be a technology for grouping cells of RATs of both E-UTRA and NR into cells for each RAT and assigning the cells to the UE and for performing data communication by using radio resources of both the MCG and the SCG. In the MR-DC, the master node can be a base station having main RRC functions related to the MR-DC, for example, functions such as addition of a secondary node, establishment, modification, and release of an RB, and addition, modification, release, and handover of an MCG; and the secondary node may be a base station having some of RRC functions, for example, modification and release of an SCG.

In the MR-DC described in NPL 8, the RRC of the RAT of a master node side may be used to configure both the MCG and the SCG. For example, in EN-DC (E-UTRA-NR Dual Connectivity), which is MR-DC in a case that the core network is the EPC 104 and the master node is the eNB 102 (also referred to as an extended eNB 102), and in NGEN-DC (NG-RAN E-UTRA-NR Dual Connectivity), which is MR-DC in a case that the core network is the 5GC 110 and the master node is the eNB 102, an E-UTRA RRC message described in NPL 4 may be transmitted and received between the eNB 102 and the UE 122. In this case, the RRC message may include not only LTE (E-UTRA) configuration information but also NR configuration information described in NPL 10. Further, the RRC message transmitted from the eNB 102 to the UE 122 may be transmitted from the eNB 102 to the UE 122 via the gNB 108. Further, the configuration of the RRC message may be used for E-UTRA/5GC (option 5 described in NPL 17), which is non-MR-DC and in which the eNB uses the 5GC as a core network.

On the contrary, in the MR-DC described in NPL 8, or in NE-DC (NR-E-UTRA Dual Connectivity), which is MR-DC in a case that the core network is the 5GC 110 and the master node is the gNB 108, an NR RRC message described in NPL 10 may be transmitted and received between the gNB 108 and the UE 122. In this case, the RRC message may include not only NR configuration information but also LTE (E-UTRA) configuration information described in NPL 4. Further, the RRC message transmitted from the gNB 108 to the UE 122 may be transmitted from the gNB 108 to the UE 122 via the eNB 102.

Further, without being limited to the case of using MR-DC, an RRC message for E-UTRA transmitted from the eNB 102 to the UE 122 may include an RRC message for NR, and an RRC message for NR transmitted from the gNB 108 to the UE 122 may include an RRC message for E-UTRA.

In addition, a network configuration, in which the master node is the eNB 102 and the EPC 104 is the core network, may be referred to as E-UTRA/EPC. In addition, a network configuration, in which the master node is the eNB 102 and the 5GC 110 is the core network, may be referred to as E-UTRA/5GC. In addition, a network configuration, in which the master node is the gNB 108 and the 5GC 110 is the core network, may be referred to as NR or NR/5GC. The names may not be limited to the case where DC is configured. In a case that DC is not configured, the above-mentioned master node may refer to a base station apparatus that communicates with a terminal apparatus.

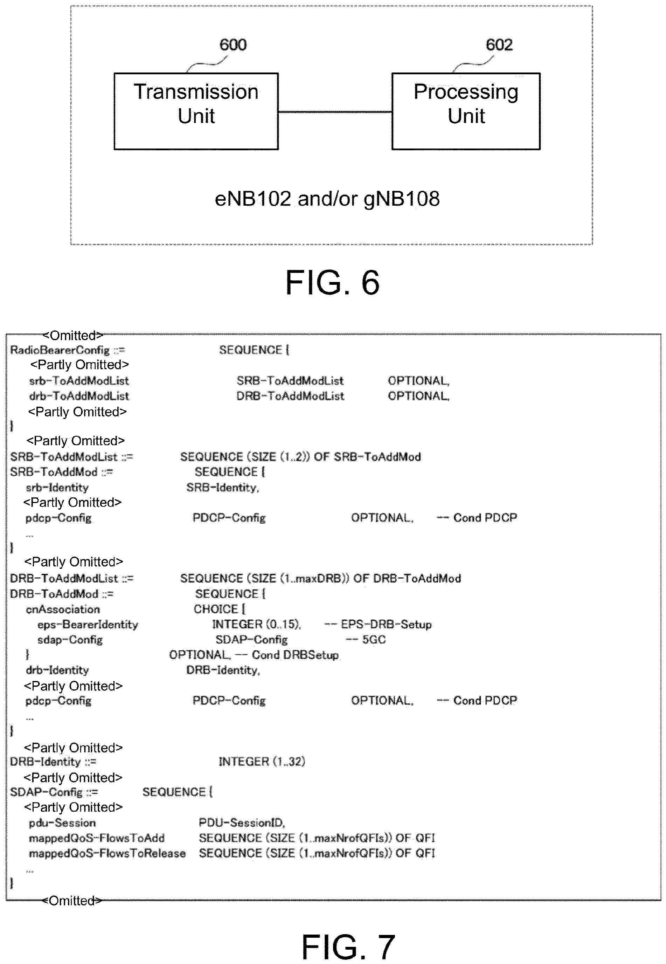

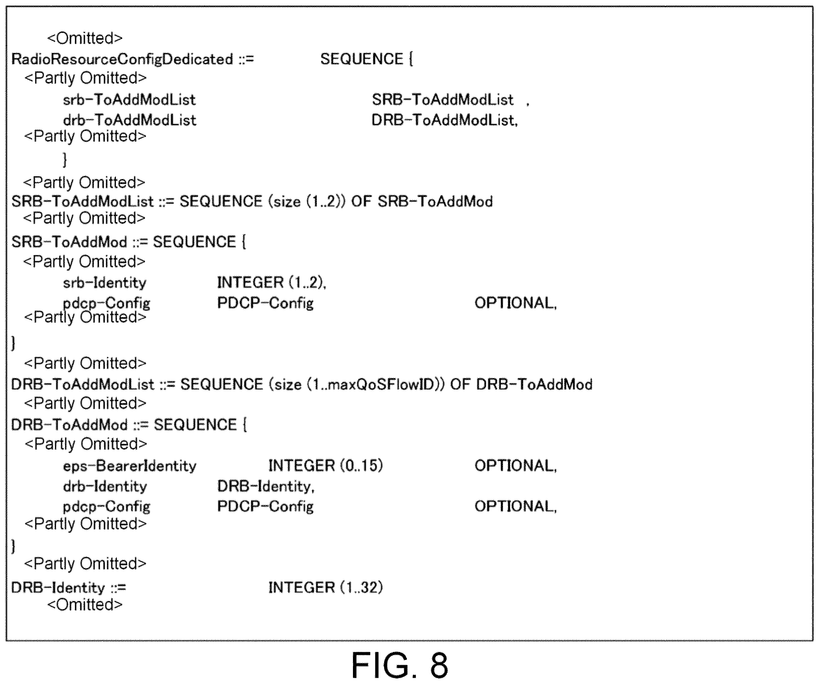

FIG. 7 is an example of an ASN.1 description that represents any one or all of fields and information elements related to a radio bearer configuration and is included in a message related to an RRC connection reconfiguration, as shown in FIG. 4, in NR. FIG. 8 is an example of an ASN.1 description that represents any one or all of fields and information elements related to a radio bearer configuration and is included in a message related to an RRC connection reconfiguration, as shown in FIG. 4, in E-UTRA. In the example of ASN.1 of FIG. 7 and FIG. 8, <omitted> and <partly omitted> are not a part of the description of ASN.1 but indicate that other pieces of information are omitted. Further, the information element may be omitted even in a place where there is no description of <omitted> or <partly omitted>. Further, the examples of ASN.1 in FIG. 7 and FIG. 8 do not correctly comply with the ASN.1 description method but represent examples of parameters of the RRC reconfiguration according to one aspect of the present invention, and other names and other notations may be used. In addition, in order to avoid complicated explanation, the examples of ASN.1 in FIG. 7 and FIG. 8 indicate only examples of main information closely related to one aspect of the present invention. Further, the parameters described in ASN.1 may be sometimes all referred to as information elements without being distinguished from fields, information elements, and the like. In addition, in the embodiment of the present invention, parameters such as fields and information elements described in ASN.1 included in the RRC message may be sometimes referred to as information.

The information element represented by RadioBearerConfig in FIG. 7 is an information element related to the configuration of radio bearers such as SRB and DRB and includes a PDCP configuration information element and a SDAP configuration information element described below. The information element represented by SRBToAddMod included in the information element represented by RadioBearerConfig may be information indicating an SRB (signaling radio bearer) configuration and may be sometimes referred to as an SRB configuration information element or a signaling radio bearer configuration information element. In addition, the information element represented by SRB-ToAddModList may be a list of information indicating the SRB configuration. The information element represented by DRBToAddMod included in the information element represented by RadioBearerConfig may be information indicating a DRB (data radio bearer) configuration and may be sometimes referred to as a DRB configuration information element or a data radio bearer configuration information element. In addition, the information element represented by DRB-ToAddModList may be a list of information indicating the DRB configuration. In addition, any one or all of the SRB configuration and the DRB configuration may be referred to as a radio bearer configuration.

The information element represented by SRB-Identity among SRB configuration information elements is information of an SRB identifier (SRB Identity) of an SRB to be added or modified and is an identifier that uniquely identifies an SRB in each terminal apparatus. The information element represented by SRB-Identity among the SRB configuration information elements may be sometimes referred to as an SRB identifier information element, a radio bearer identifier information element, or a signaling radio bearer identifier information element.

The information element represented by DRB-Identity among DRB configuration information elements is information of a DRB identifier (DRB Identity) of a DRB to be added or modified and is an identifier that uniquely identifies a DRB in each terminal apparatus. The information element represented by DRB-Identity among the DRB configuration information elements may be sometimes referred to as a DRB identifier information element, a radio bearer identifier information element, or a data radio bearer identifier information element. The value of the DRB identifier is an integer value from 1 to 32 in the example of FIG. 7, but another value may be taken. In the case of DC, the DRB identifier is unique within the scope of the UE 122.

The information element represented by cnAssociation among the DRB configuration information elements may be an information element indicating whether the EPC 104 or the 5GC 110 is used for the core network and may also be referred to as a core network association information element. That is, when the UE 122 is connected to the EPC, the DRB is associated with an EPS bearer identifier information element (eps-BearerIdentity) in cnAssociation or an EPS bearer identifier (EPS bearer identity) that is the value of the EPS bearer identifier information element; and when the UE 122 is connected to the 5GC 110, the DRB is associated with an SDAP entity that is configured according to an SDAP configuration information element (sdap-Config) described below, or a PDU session information element described below and included in the SDAP configuration information element, or a PDU session identifier that is the value of the PDU session information element, or a PDU session indicated by the PDU session information element. That is, the information represented by cnAssociation may include an EPS bearer identifier information element (eps-BearerIdentity) in the case that the EPC 104 is used for the core network, such as in a case that the EN-DC is used, and may include an information element (sdap-Config) indicating the SDAP configuration in the case that the 5GC 110 is used for the core network, that is, in the case that the EN-DC is not used, and the like.

In a case that the core network is the 5GC 110, the information element represented by sdap-Config may be information regarding the configuration or reconfiguration of the SDAP entity that determines a mapping method between a QoS flow and a DRB, and may be sometimes referred to as an SDAP configuration information element.

The field or information element indicated by pdu-session or PDU-SessionID included in the SDAP configuration information element may be a PDU session identifier of a PDU session, which is described in NPL 2 and to which a QoS flow belongs, and may be referred to as a PDU session identifier information element; and the QoS flow is mapped to a radio bearer corresponding to the value of a radio bearer identifier information element included in a DRB configuration information element including the SDAP configuration information element. The value of the PDU session identifier information element may be an integer that is not negative. In addition, in each terminal apparatus, a plurality of DRB identifiers may correspond to one PDU session identifier.

The information element indicated by mappedQoS-FlowsToAdd included in the SDAP configuration information element may be information indicating a list of QoS Flow Identity (QFI) information elements described below for a QoS flow mapped to or additionally mapped to a radio bearer corresponding to the value of a radio bearer identifier information element included in a DRB configuration information element including the SDAP configuration information element, and may be referred to as an added QoS flow information element. The above-mentioned QoS flow may be a QoS flow of a PDU session indicated by a PDU session information element included in the SDAP configuration information element.

In addition, the information element indicated by mappedQoS-FlowsToRelease included in the SDAP configuration information element may be information indicating a list of QoS Flow Identity (QFI) information elements described below for a QoS flow of which the mapping relationship is released among QoS flows mapped to a radio bearer corresponding to the value of a radio bearer identifier information element included in a DRB configuration information element including the SDAP configuration information element, and may be referred to as a released QoS flow information element. The above-mentioned QoS flow may be a QoS flow of a PDU session indicated by a PDU session information element included in the SDAP configuration information element.

An information element indicated by the QFI may be a QoS flow identifier that uniquely identifies a QoS flow as described in NPL 2, and may be referred to as a QoS flow identifier information element. The value of the QoS flow identifier information element may be an integer that is not negative. Further, the value of the QoS flow identifier information element may be unique for a PDU session.

In addition, the SDAP configuration information element may further include an uplink header information element indicating whether an uplink SDAP header exists in uplink data transmitted via a configured DRB, a downlink header information element indicating whether a downlink SDAP header exists in downlink data received via a configured DRB, a default bearer information element indicating whether a configured DRB is a default radio bearer (default DRB), and the like.

In addition, the information element represented by pdcp-Config or PDCP-Config in an SRB configuration information element and a DRB configuration information element may be an information element related to an NR PDCP entity configuration for establishing or modifying the PDCP 306 for the SRB and/or the DRB, and may be referred to as a PDCP configuration information element. The information elements related to the NR PDCP entity configuration may include an information element indicating the size of a sequence number for an uplink, an information element indicating the size of a sequence number for a downlink, an information element indicating a profile of header compression (RoHC: RObust Header Compression), a re-ordering timer information element, and the like.

In FIG. 8, the information element represented by RadioResourceConfigDedicated may be an information element used for configuring, modifying, and releasing a radio bearer, or the like. The information element represented by SRBToAddMod included in the information element represented by RadioResourceConfigDedicated may be information indicating an SRB (signaling radio bearer) configuration and may be sometimes referred to as an SRB configuration information element or a signaling radio bearer configuration information element. In addition, the information element represented by SRB-ToAddModList may be a list of information indicating the SRB configuration. The information element represented by DRBToAddMod included in the information element represented by RadioResourceConfigDedicated may be information indicating an DRB (data radio bearer) configuration and may be sometimes referred to as a DRB configuration information element or a data radio bearer configuration information element. In addition, the information element represented by DRB-ToAddModList may be a list of information indicating the DRB configuration. In addition, any one or all of the SRB configuration and the DRB configuration may be referred to as a radio bearer configuration.

The information element represented by SRB-Identity among SRB configuration information elements is information of an SRB identifier (SRB Identity) of an SRB to be added or modified and is an identifier that uniquely identifies an SRB in each terminal apparatus. The information element represented by SRB-Identity among the SRB configuration information elements may be sometimes referred to as an SRB identifier information element, a radio bearer identifier information element, or a signaling radio bearer identifier information element. The information element represented by SRB-Identity in FIG. 8 may be an information element having the same role as the information element represented by SRB-Identity in FIG. 7.

The information element represented by DRB-Identity among DRB configurations is information of a DRB identifier (DRB Identity) of a DRB to be added or modified and is a DRB identifier that uniquely identifies a DRB in each terminal apparatus. The information element represented by DRB-Identity among the DRB configuration information elements may be sometimes referred to as a DRB identifier information element, a radio bearer identifier information element, or a data radio bearer identifier information element. The value of the DRB identifier is an integer value from 1 to 32 in the example of FIG. 8, but another value may be taken. The information element represented by DRB-Identity in FIG. 8 may be an information element having the same role as the information element represented by DRB-Identity in FIG. 7.

The information element represented by eps-Bearer Identity in the DRB configuration information element may be an EPS bearer identifier that uniquely identifies an EPS bearer in each terminal apparatus. The information element represented by eps-BearerIdentity may also be referred to as an EPS bearer identifier information element. The value of the EPS bearer identifier is an integer value from 1 to 15 in the example of FIG. 8, but another value may be taken. The information element represented by eps-BearerIdentity in FIG. 8 may be an information element having the same role as the information element represented by eps-BearerIdentity in FIG. 7. Further, the EPS bearer identifier and the DRB identifier may correspond to each other in a one-to-one manner in each terminal apparatus.

In addition, the information element represented by pdcp-Config or PDCP-Config in an SRB configuration information element and a DRB configuration information element may be an information element related to an E-UTRA PDCP entity configuration for establishing or modifying the PDCP 206 for the SRB and/or the DRB, and may be referred to as a PDCP configuration information element. The information elements related to the E-UTRA PDCP entity configuration may include an information element indicating the size of a sequence number, an information element indicating a profile of header compression (RoHC: RObust Header Compression), a re-ordering timer information element, and the like.

In addition, some or all of the information elements shown in FIG. 7 or FIG. 8 may be optional. That is, the information elements shown in FIG. 7 or FIG. 8 may be included in a message related to an RRC connection reconfiguration according to needs and conditions. In addition, the message related to the RRC connection reconfiguration may include an information element indicating that a full configuration is applied in addition to the information element related to a radio bearer configuration. The information element meaning the application of the full configuration may be represented by an information element name such as fullConfig or may be used to indicate that a full configuration is applied by using true, enable, or the like.

### (EMBODIMENTS)

Hereinafter, the embodiments of the present invention will be described with reference to FIG. 1 to FIG. 11. In the embodiment of the present invention, processing performed when a core network to which the UE 122 is connected is switched from the EPC 104 to the 5GC 110 and processing performed when a core network to which the UE 122 is connected is switched from the 5GC 110 to the EPC 104, by handover or the like, will be described. The expression that a core network to which the UE 122 is connected is switched from the EPC 104 to the 5GC 110 may mean that a state where the UE 122 is connected to the EPC 104 via the eNB 102 is switched to a state where the UE 122 is connected to the 5GC 110 via the eNB 102. In addition, the expression that a core network to which the UE 122 is connected is switched from the EPC 104 to the 5GC 110 may mean that a state where the UE 122 is connected to the EPC 104 via the eNB 102 is switched to a state where the UE 122 is connected to the 5GC 110 via the gNB 108. In addition, the expression that a core network to which the UE 122 is connected is switched from the 5GC 110 to the EPC 104 may mean that a state where the UE 122 is connected to the 5GC 110 via the eNB 102 is switched to a state where the UE 122 is connected to the EPC 104 via the eNB 102. In addition, the expression that a core network to which the UE 122 is connected is switched from the 5GC 110 to the EPC 104 may mean that a state where the UE 122 is connected to the 5GC 110 via the gNB 108 is switched to a state where the UE 122 is connected to the EPC 104 via the eNB 102.

Further, in the embodiment of the present invention, a handover that involves switching the core network to which the terminal apparatus is connected may be sometimes referred to as an inter-system handover, and a handover that does not involve switching the core network to which the terminal apparatus is connected may be sometimes referred to as an intra-system handover. Further, in the embodiment of the present invention, a handover that involves switching the RAT to which the terminal apparatus is connected may be sometimes referred to as an inter-RAT handover, and a handover that does not involve switching the core network to which the terminal apparatus is connected may be sometimes referred to as an intra-RAT handover. That is, a handover where the base station to which the UE 122 is connected is switched from an eNB to a gNB or from a gNB to an eNB may be referred to as an inter-RAT handover, and a handover where the base station to which the UE 122 is connected is switched from an eNB to another eNB or from a gNB to another gNB may be referred to as an intra-RAT handover.

In the embodiment of the present invention, when the terminal apparatus receives a message related to an RRC connection reconfiguration transmitted from the base station apparatus, the handover may be performed based on various parameters related to the handover included in the message related to the RRC connection reconfiguration. In addition, the various parameters related to the handover may be an information element named MobilityControlInfo described in NPL 4, may be an information element named ReconfigurationWithSync described in NPL 10, or may be an information element having another name.

In addition, in the embodiment of the present invention, the handover may be performed based on the terminal apparatus receiving from the base station apparatus an RRC message indicating the movement of the terminal apparatus from a currently connected RAT (E-UTRA, NR, etc.) to a second RAT (E-UTRA, NR, UTRA, GERAN, etc.). The RRC message indicating the movement of the terminal apparatus from the currently connected RAT to the second RAT may be the name of MobilityFromEUTRACommand described in NPL 4, may be the name of MobilityFromNRCommand described in NPL 10, or may be another name. In addition, a message related to an RRC connection reconfiguration related to a second RAT configuration may be included in the above-mentioned RRC message indicating the movement of the terminal apparatus from the currently connected RAT to the second RAT.

FIG. 5 is a schematic block diagram illustrating a configuration of a terminal apparatus (UE 122) according to each embodiment of the present invention. Further, in order to avoid complicated explanation, only the main components closely related to one aspect of the present invention are shown in FIG. 5.

The UE 122 shown in FIG. 5 includes a reception unit 500 and a processing unit 502. The reception unit 500 receives an RRC message or the like from a base station apparatus, and the processing unit 502 performs processing according to any or all pieces of configuration information among various information elements (IEs), various fields, various conditions, etc. included in the received message. The base station apparatus described above may be an eNB 102 or a gNB 108.

FIG. 6 is a schematic block diagram illustrating a configuration of a base station apparatus according to each embodiment of the present invention. Further, in order to avoid complicated explanation, only the main components closely related to one aspect of the present invention are shown in FIG. 6. The base station apparatus described above may be an eNB 102 or a gNB 108.

The base station apparatus shown in FIG. 6 includes a transmission unit 600 and a processing unit 602. The transmission unit 600 transmits an RRC message or the like to the UE 122, and the processing unit 602 causes the processing unit 502 of the UE 122 to perform processing by creating an RRC message that includes any or all pieces of configuration information among various information elements (IEs), various fields, various conditions, etc. and transmitting the RRC message to the UE 122.

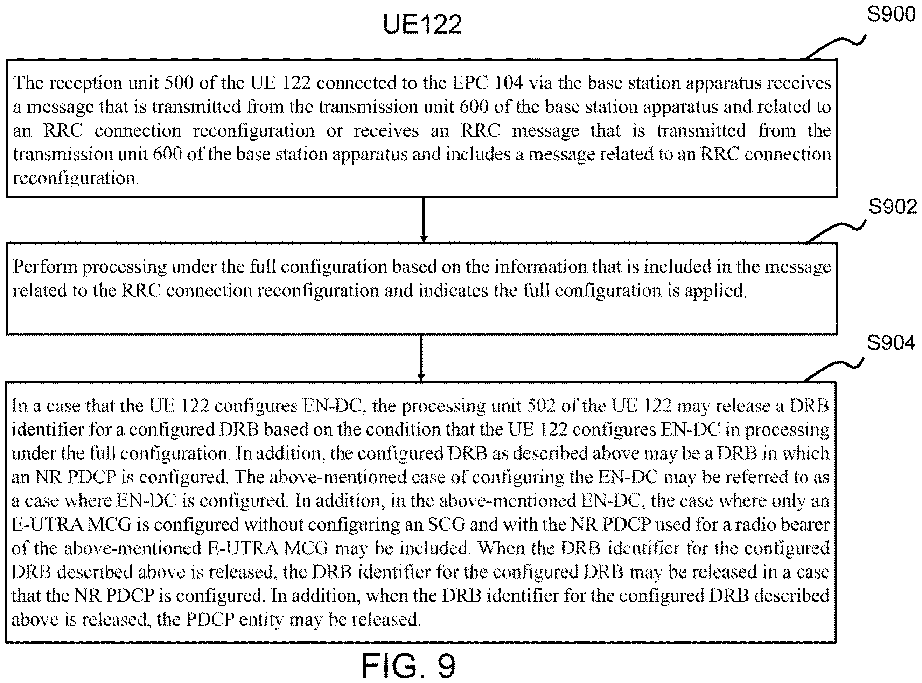

An example of a processing method of the UE 122 according to an embodiment of the present invention will be described with reference to FIG. 9.

The reception unit 500 of the UE 122 connected to the EPC 104 via the base station apparatus receives a message that is transmitted from the transmission unit 600 of the base station apparatus and related to an RRC connection reconfiguration or receives an RRC message that is transmitted from the transmission unit 600 of the base station apparatus and includes a message related to an RRC connection reconfiguration (step S900).

The processing unit 502 of the UE 122 confirms whether the above-mentioned message related to the RRC connection reconfiguration includes information indicating that a full configuration is applied. In a case that the above-mentioned message includes the information indicating the full configuration is applied, processing under the full configuration is performed based on the information that is included in the message related to the RRC connection reconfiguration and indicates the full configuration is applied (step S902).

Further, the message related to the RRC connection reconfiguration described above may be a message named RRCConnectionReconfiguration described in NPL 4 or may be a message named RRCReconfiguration described in NPL 10. In addition, the above-mentioned information indicating the full configuration is applied may be an information element named FullConfig described in NPL 4 or may be an information element named FullConfig described in NPL 10.

In a case that the UE 122 configures EN-DC, the processing unit 502 of the UE 122 may release a DRB identifier for a configured DRB based on the condition that the UE 122 configures EN-DC in processing under the full configuration. In addition, the configured DRB as described above may be a DRB in which an NR PDCP is configured. The above-mentioned case of configuring the EN-DC may be referred to as a case where EN-DC is configured. In addition, not only the case where an SCG is configured to be in the above-mentioned EN-DC, but also the case where only an E-UTRA MCG is configured without configuring an SCG and with the NR PDCP used for a radio bearer of the above-mentioned E-UTRA MCG may be included. Further, the case where the NR PDCP is used for the radio bearer of the above-mentioned E-UTRA MCG is the case where an SN terminal bearer is configured or may be the case where an SN terminal bearer is configured. In addition, when the DRB identifier for the configured DRB described above is released, the DRB identifier for the configured DRB may be released in a case that the NR PDCP is configured. In addition, when the DRB identifier for the configured DRB described above is released, the PDCP entity may be released (step S904).

Further, a determination based on the UE 122 configuring the EN-DC in step S904 may be a determination based on the UE 122 being connected to the E-UTRA/EPC and the NR PDCP being configured for all or any one of radio bearers configured by the UE 122. In addition, a determination based on the UE 122 configuring the EN-DC in step S904 may be a determination based on an inter-system handover from E-UTRA/EPC and the NR PDCP being configured for all or any one of radio bearers configured by the UE 122. In addition, the above-mentioned determination based on the UE 122 being connected to the E-UTRA/EPC may be a determination based on the UE 122 being not connected to the 5GC 110. In addition, the expression that the UE 122 configures the EN-DC in step S904 may mean that the UE 122 is connected to EPC104 and the NR PDCP is configured for all or any one of radio bearers configured by the UE 122 when the UE 122 performs processing under the full configuration in step S904 or when the UE 122 receives a message related to an RRC connection reconfiguration or receives an RRC message that includes a message related to an RRC connection reconfiguration in step S900, or may be expressed in other ways.

Further, the release of the DRB identifier for the configured DRB in step S904 may be the release of the radio bearer configuration indicated by the information element represented by RadioBearerConfig. The radio bearer configuration indicated by the information element represented by RadioBearerConfig described above may include a radio bearer identifier, a PDCP configuration, and the like. In addition, the radio bearer configuration described above may be an SRB configuration and a DRB configuration or may be either an SRB configuration or a DRB configuration.

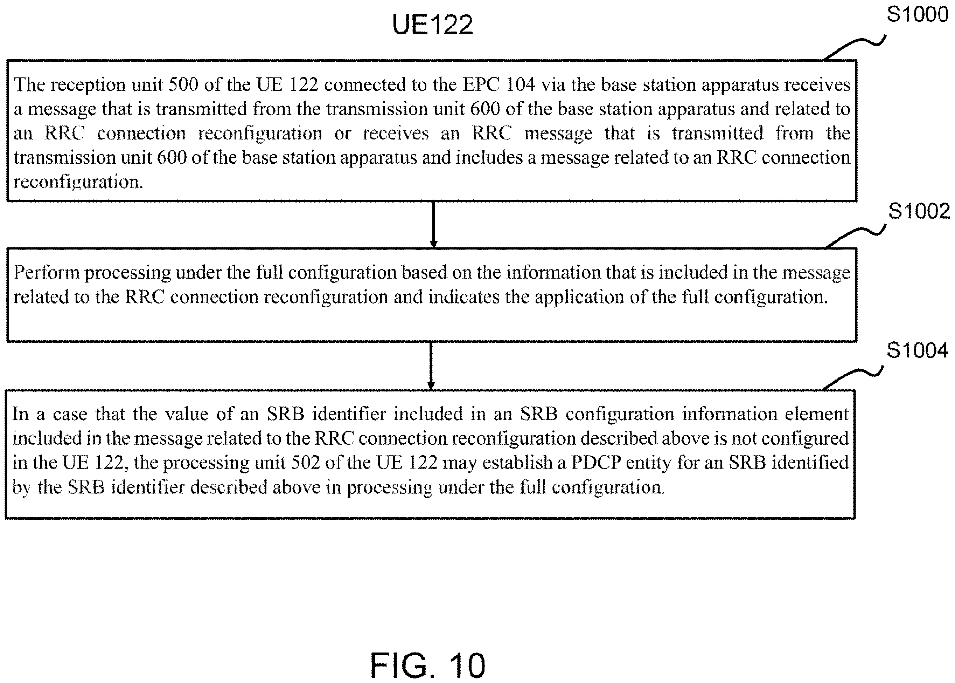

A second example of a processing method of the UE 122 according to an embodiment of the present invention will be described with reference to FIG. 10.

The reception unit 500 of the UE 122 connected to the EPC 104 via the base station apparatus receives a message that is transmitted from the transmission unit 600 of the base station apparatus and related to an RRC connection reconfiguration or receives an RRC message that is transmitted from the transmission unit 600 of the base station apparatus and includes a message related to an RRC connection reconfiguration (step S1000).

The processing unit 502 of the UE 122 confirms whether the above-mentioned message related to the RRC connection reconfiguration includes information indicating that a full configuration is applied. In a case that the above-mentioned message includes the information indicating that the full configuration is applied, processing under the full configuration is performed based on the information that is included in the message related to the RRC connection reconfiguration and indicates the application of the full configuration (step S1002).

Further, the message related to the RRC connection reconfiguration described above may be a message named RRCConnectionReconfiguration described in NPL 4 or may be a message named RRCReconfiguration described in NPL 10. In addition, the above-mentioned information indicating the full configuration is applied may be an information element named FullConfig described in NPL 4 or may be an information element named FullConfig described in NPL 10.

In a case that the value of an SRB identifier included in an SRB configuration information element included in the message related to the RRC connection reconfiguration described above is not configured in the UE 122, the processing unit 502 of the UE 122 may establish a PDCP entity for an SRB identified by the SRB identifier described above in processing under the full configuration. Further, the PDCP entity described above may be an NR PDCP entity (step S 1004).

Further, in step S1004, in a case that the value of the SRB identifier included in the SRB configuration information element included in the message related to the RRC connection reconfiguration described above is configured in the UE 122, an SRB identified by the SRB identifier described above may be reconfigured according to a default configuration. The default configuration described above may include a default PDCP configuration, a default RLC entity configuration, or a logical channel configuration. In addition, when the value of the SRB identifier included in the SRB configuration information element included in the message related to the RRC connection reconfiguration described above is configured in the UE 122, instead of reconfiguring the SRB identified by the SRB identifier described above according to the default configuration, a PDCP entity may be established or configured according to a security configuration included in the message related to the RRC connection reconfiguration described above. The process of establishing or configuring the PDCP entity according to the security configuration included in the message related to the RRC connection reconfiguration described above may be performed based on the UE 122 being connected to the E-UTRA/EPC, based on the UE 122 having been connected to the E-UTRA/EPC, or based on an inter-system handover from the E-UTRA/EPC. In addition, the process of establishing or configuring the PDCP entity according to the security configuration included in the message related to the RRC connection reconfiguration described above may be performed based on the UE 122 being connected to the E-UTRA/EPC, based on the UE 122 having been connected to the E-UTRA/EPC, or based on an inter-system handover from the E-UTRA/EPC, and based on the NR PDCP being configured for all or any one of radio bearers configured by the UE 122. In addition, the process of establishing or configuring the PDCP entity according to the security configuration included in the message related to the RRC connection reconfiguration described above may be performed based on the UE 122 configuring EN-DC, based on the UE 122 having configured EN-DC, or based on an inter-system handover from EN-DC. The process of establishing or configuring the PDCP entity according to the security configuration included in the message related to the RRC connection reconfiguration described above may be performed in a case that the message related to the RRC connection reconfiguration described above includes an information element that instructs the change of a security key.

In step S1004, in a case that the value of an SRB identifier included in an SRB configuration information element is not configured in the UE 122, the process of establishing the PDCP entity for the SRB identified by the SRB identifier described above may be performed after the processing under the full configuration is completed. In addition, the above-mentioned case that the value of the SRB identifier included in the SRB configuration information element is not configured in the UE 122 may be referred to as the case that the UE 122 is connected to the E-UTRA/EPC or may be referred to as the case that an inter-system handover from the E-UTRA/EPC is performed. In addition, the above-mentioned case that the value of the SRB identifier included in the SRB configuration information element is not configured in the UE 122 may mean that the UE 122 is connected to EPC104 when the UE 122 performs processing under the full configuration in step S1004 or when the UE 122 receives a message related to an RRC connection reconfiguration or receives an RRC message that includes a message related to an RRC connection reconfiguration in step S1000, or may be expressed in other ways. In addition, the above-mentioned case that the value of the SRB identifier included in the SRB configuration information element is not configured in the UE 122 may be referred to as the case that a PDCP entity does not exist for the value of the SRB identifier included in the SRB configuration information element. Further, the PDCP entity described above may be an NR PDCP entity.

In addition, in step S 1004, in the above-mentioned case that the value of the SRB identifier included in the SRB configuration information element included in the message related to the RRC connection reconfiguration is not configured in the UE 122, instead of establishing the PDCP entity for the SRB identified by the SRB identifier described above, the processing unit 502 of the UE 122 may release an E-UTRA PDCP and establish an NR PDCP in the case that the E-UTRA PDCP is configured for the SRB identified by the SRB identifier included in the SRB configuration information element included in the message related to the RRC connection reconfiguration described above. Further, in the case that the E-UTRA PDCP is configured for the SRB identified by the SRB identifier included in the SRB configuration information element, the process of releasing the E-UTRA PDCP and establishing the NR PDCP described above may be performed after the processing under the full configuration is completed. In addition, in the case that the NR PDCP is configured for the SRB identified by the SRB identifier included in the SRB configuration information element described above, the NR PDCP described above may be reconfigured according to a default configuration. Further, in the case that the NR PDCP is configured for the SRB identified by the SRB identifier included in the SRB configuration information element described above, instead of configuring the NR PDCP according to the default configuration described above, the PDCP entity may be established or configured according to the security configuration included in the message related to the RRC connection reconfiguration described above. The process of establishing or configuring the PDCP entity according to the security configuration included in the message related to the RRC connection reconfiguration described above may be performed based on the UE 122 being connected to the E-UTRA/EPC, based on the UE 122 having been connected to the E-UTRA/EPC, or based on an inter-system handover from the E-UTRA/EPC. In addition, the process of establishing or configuring the PDCP entity according to the security configuration included in the message related to the RRC connection reconfiguration described above may be performed based on the UE 122 being connected to the E-UTRA/EPC, based on the UE 122 having been connected to the E-UTRA/EPC, or based on an inter-system handover from the E-UTRA/EPC, and based on the NR PDCP being configured for all or any one of radio bearers configured by the UE 122. In addition, the process of establishing or configuring the PDCP entity according to the security configuration included in the message related to the RRC connection reconfiguration described above may be performed based on the UE 122 configuring EN-DC, based on the UE 122 having configured EN-DC, or based on an inter-system handover from EN-DC. The process of establishing or configuring the PDCP entity according to the security configuration included in the message related to the RRC connection reconfiguration described above may be performed in a case that the message related to the RRC connection reconfiguration described above includes an information element that instructs the change of a security key.

In addition, in step S1004, in the above-mentioned case that the E-UTRA PDCP is configured for the SRB identified by the SRB identifier included in the SRB configuration information element included in the message related to the RRC connection reconfiguration, the processing of releasing the E-UTRA PDCP and establishing the NR PDCP described above may be performed based on the UE 122 being connected to the E-UTRA/EPC, based on the UE 122 having been connected to the E-UTRA/EPC, or based on an inter-system handover from the E-UTRA/EPC.

Further, in step S1004, when the PDCP entity is established, security may be configured according to an information element related to the security configuration included in the message related to the RRC connection reconfiguration. Further, instead of configuring the security according to the information element related to the security configuration included in the message related to the RRC connection configuration, a security configuration of a current MCG may be applied. Further, in step S1004, when the PDCP entity is established, the PDCP entity may be established according to a PDCP configuration included in the SRB configuration information element, or the PDCP entity may be established according to a default PDCP configuration.

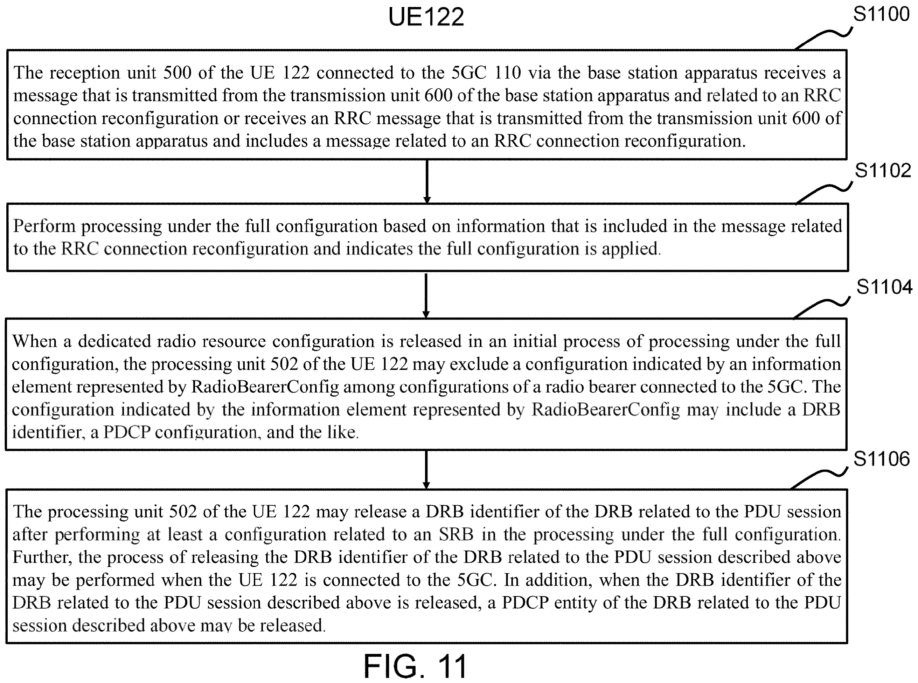

A third example of a processing method of the UE 122 according to an embodiment of the present invention will be described with reference to FIG. 11.

The reception unit 500 of the UE 122 connected to the EPC 104 via the base station apparatus receives a message that is transmitted from the transmission unit 600 of the base station apparatus and related to an RRC connection reconfiguration or receives an RRC message that is transmitted from the transmission unit 600 of the base station apparatus and includes a message related to an RRC connection reconfiguration (step S1100).

The processing unit 502 of the UE 122 confirms whether the above-mentioned message related to the RRC connection reconfiguration includes information indicating that a full configuration is applied. In a case that the above-mentioned message includes the information indicating the full configuration is applied, processing under the full configuration is performed based on information that is included in the message related to the RRC connection reconfiguration and indicates the full configuration is applied (step S1102).

Further, the message related to the RRC connection reconfiguration described above may be a message named RRCConnectionReconfiguration described in NPL 4 or may be a message named RRCReconfiguration described in NPL 10. In addition, the above-mentioned information indicating the full configuration is applied may be an information element named FullConfig described in NPL 4 or may be an information element named FullConfig described in NPL 10.

When a dedicated radio resource configuration is released in an initial process of processing under the full configuration, the processing unit 502 of the UE 122 may exclude a configuration indicated by an information element represented by RadioBearerConfig among configurations of a radio bearer connected to the 5GC. The configuration indicated by the information element represented by RadioBearerConfig may include a DRB identifier, a PDCP configuration, and the like (step S1104).

Further, instead of excluding the configuration indicated by the information element represented by RadioBearerConfig among the configurations of the radio bearer connected to 5GC in step S1004, the configuration indicated by the information element represented by RadioBearerConfig may be excluded among DRB configurations corresponding to a PDU session.

Next, the processing unit 502 of the UE 122 may release a DRB identifier of the DRB related to the PDU session after performing at least a configuration related to an SRB in the processing under the full configuration. Further, the process of releasing the DRB identifier of the DRB related to the PDU session described above may be performed when the UE 122 is connected to the 5GC. In addition, when the DRB identifier of the DRB related to the PDU session described above is released, a PDCP entity of the DRB related to the PDU session described above may be released (step S1106). Further, the process of releasing the DRB identifier of the DRB related to the PDU session described above may be performed based on the UE 122 being connected to the 5GC.

Further, in step S1104, the processing unit 502 of the UE 122 may release all dedicated radio resource configurations related to the E-UTRA/EPC in the initial process of processing under the full configuration based on the UE 122 being connected to the E-UTRA/EPC, based on the UE 122 having been connected to the E-UTRA/EPC, or based on an inter-system handover from the E-UTRA/EPC. In addition, when all the dedicated radio resource configurations related to the E-UTRA/EPC are released, a PDCP configuration of the SRB may be excluded from the radio resource configurations to be released. Further, when all the dedicated radio resource configurations related to the E-UTRA/EPC are released, a C-RNTI (Cell Radio Network Temporary ID) of an MCG may be excluded from the radio resource configurations to be released. In addition, when all the dedicated radio resource configurations related to the E-UTRA/EPC are released, a security configuration of the MCG may be excluded from the radio resource configurations to be released.

Further, in step S 1104, the processing unit 502 of the UE 122 may release all E-UTRA SCG configurations in the case that the UE 122 configures the NE-DC in the initial process of the processing under the full configuration. In addition, in the above-mentioned E-UTRA SCG configurations, the configuration indicated by the information element represented by RadioBearerConfig may be excluded among the DRB configurations. Further, the configuration indicated by the information element represented by RadioBearerConfig may include a DRB identifier, a PDCP configuration, and the like.

Further, the E-UTRA/EPC in an embodiment of the present invention may be referred to as an EPC. In addition, the 5GC in an embodiment of the present invention may be referred to as an NR/5GC or may be referred to as an NR

In addition, in an embodiment of the present invention, the fact that the UE 122 configures the EN-DC or has configured the EN-DC, or that the UE 122 is connected to the E-UTRA/EPC, or that the UE 122 has been connected to the UTRA/EPC, or that an inter-system handover from the E-UTRA/EPC is performed may be "other (else)" with respect to the fact that the UE 122 is connected to the 5GC. In addition, in an embodiment of the present invention, the facts that the EN-DC is configured, or that the EN-DC has been configured, or that the UE 122 is connected to the E-UTRA/EPC, or that the UE 122 has been connected to the UTRA/EPC, or that an inter-system handover from the E-UTRA/EPC is performed may be referred to as the fact that the DRB configured in the UE 122 corresponds to an EPS bearer or an EPS bearer identifier.

Further, the RRC message including a message related to the RRC connection reconfiguration in the embodiment of the present invention may be a message indicating that a movement is performed from an E-UTRA to a second RAT and may be a message named MobilityFromEUTRACommand described in NPL 4. In addition, the RRC message including a message related to the RRC connection reconfiguration in the embodiment of the present invention may be a message indicating that a movement is performed from an NR to a second RAT and may be a message named MobilityFromNRCommand described in NPL 10.

Further, the DRB configuration information element in the embodiment of the present invention may be an NR DRB configuration information element and included in an information element named radioBearerConfig described in NPL 10, or may be an E-UTRA DRB configuration information element and included in an information element named radioResourceConfigDedicated described in NPL 4.

In this way, in an embodiment of the present invention, the processing can be performed according to the types of handover source RAT, handover destination RAT, handover source core network, and handover destination core network of the UE 122. That is, the terminal apparatus can reduce the complexity of protocol processing and perform communication efficiently.

The terminal apparatus and the method in each embodiment of the present invention can be described for example as follows.

That is, a terminal apparatus communicating with a base station apparatus comprises: a reception unit configured to receive a message related to an RRC connection reconfiguration from the base station apparatus; and a processing unit configured to perform processing under a full configuration based on information that is included in the message related to the RRC connection reconfiguration and indicates that the full configuration is applied, and configured to establish an NR PDCP entity, in the processing under the full configuration, based on a fact that the NR PDCP entity does not exist for an SRB corresponding to an SRB identifier included in an SRB configuration included in the message related to the RRC connection reconfiguration.

In addition, one aspect of the present invention provides a base station apparatus communicating with a terminal apparatus and comprising: a reception unit configured to transmit a message related to an RRC connection reconfiguration from the base station apparatus; and a processing unit configured to cause the terminal apparatus to perform processing under a full configuration based on information that is included in the message related to the RRC connection reconfiguration and indicates that the full configuration is applied, and cause the terminal apparatus to establish an NR PDCP entity, in the processing under the full configuration, based on a fact that the NR PDCP entity does not exist for an SRB corresponding to an SRB identifier included in an SRB configuration included in the message related to the RRC connection reconfiguration.

In addition, one aspect of the present invention provides a method for a terminal apparatus communicating with a base station apparatus, and the method comprises: receiving a message related to an RRC connection reconfiguration from the base station apparatus; performing processing under a full configuration based on information that is included in the message related to the RRC connection reconfiguration and indicates that the full configuration is applied; and establishing an NR PDCP entity, in the processing under the full configuration, based on a fact that the NR PDCP entity does not exist for an SRB corresponding to an SRB identifier included in an SRB configuration included in the message related to the RRC connection reconfiguration.

In addition, one aspect of the present invention provides a method for a base station apparatus communicating with a terminal apparatus, and the method comprises: transmitting a message related to an RRC connection reconfiguration from the base station apparatus; causing the terminal apparatus to perform processing under a full configuration based on information that is included in the message related to the RRC connection reconfiguration and indicates that the full configuration is applied; and causing the terminal apparatus to establish an NR PDCP entity, in the processing under the full configuration, based on a fact that the NR PDCP entity does not exist for an SRB corresponding to an SRB identifier included in an SRB configuration included in the message related to the RRC connection reconfiguration.

The program operating in the apparatuses according to one aspect of the present invention may be a program that controls a central processing unit (CPU) to operate a computer so as to implement the functions of the embodiment according to one aspect of the present invention. The program or the information processed by the program is temporarily read into a volatile memory such as Random Access Memory (RAM) during being processed or stored in a non-volatile memory such as a flash memory or a Hard Disk Drive (HDD), and is read, corrected and written by the CPU as necessary.

In addition, a part of the apparatus in the above-described embodiment may be realized by a computer. In that case, it may be realized by recording a program for realizing the control function on a computer-readable recording medium, and causing a computer system to read the program recorded on the recording medium for execution. The "computer system" described herein refers to a computer system built into the apparatuses, and includes an operating system and hardware components such as peripheral devices. In addition, the "computer-readable recording medium" may be any of a semiconductor recording medium, an optical recording medium, a magnetic recording medium, and the like.

Further, the "computer-readable recording medium" may include a recording medium that dynamically holds a program for a short period of time, for example, a communication line used in a case that a program is transmitted via a network such as the Internet or a communication line such as a telephone line, and a recording medium that stores a program for a certain period of time, for example, a volatile memory in a computer system that serves as a server or a client in the above case. Further, the above-mentioned program may be configured to realize some of the functions described above, and also may be configured to be capable of realizing the functions described above in combination with a program already recorded in the computer system.

In addition, the various functional blocks or various features of the apparatuses used in the above-mentioned embodiments may be installed or performed by a circuit, i.e., typically an integrated circuit or multiple integrated circuits. Circuits designed to execute the functions described in the present description may include general-purpose processors, digital signal processors (DSPs), application specific integrated circuits (ASICs), field programmable gate arrays (FPGAs) or other programmable logic devices, discrete gates or transistor logic, discrete hardware components, or any combination of the above. The general-purpose processor may be a microprocessor, or instead the processor may be a conventional processor, controller, microcontroller, or state machine. The general-purpose processor or each of the above-mentioned circuits may include a digital circuit, or may include an analog circuit. In addition, when an integrated circuit technology that replaces the current integrated circuit appears due to advances in semiconductor technology, it is also possible to use an integrated circuit based on this technology.

In addition, the present invention is not limited to the above-described embodiments. In the embodiments, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail with reference to the accompanying drawings, but the specific configuration is not limited to the present embodiments and includes design modification and the like without departing from the scope of the present invention. In addition, various modifications within the scope presented by the claims may be made to the present invention, and embodiments obtained by suitably combining technical means disclosed by the different embodiments may also be included in the technical scope of the present invention. In addition, a configuration in which elements having the same effects in the above-mentioned embodiments are substituted for one another may also be included in the technical scope of the present invention.

One aspect of the present invention can be used in, for example, a communication system, a communication equipment (e.g., a mobile phone apparatus, a base station apparatus, a wireless LAN apparatus, or a sensor apparatus), an integrated circuit (e.g., a communication chip), a program, or the like.

## Claims

1. A terminal apparatus communicating with a base station apparatus, comprising:
a reception unit configured to receive an RRC connection reconfiguration message from the base station apparatus; and
a processing unit configured to establish an NR PDCP for an SRB identifier included in the RRC connection reconfiguration message based on information that is included in the RRC connection reconfiguration message and indicates that a full configuration is applied and based on an inter-system handover performed by the terminal apparatus from an UTRA or an EPC to an E-UTRA or a 5GC.

2. A base station apparatus communicating with a terminal apparatus, comprising:
a transmission unit configured to transmit an RRC connection reconfiguration message to the terminal apparatus; and
a processing unit configured to cause the terminal apparatus to perform processing by including information indicating that a full configuration is applied in the RRC connection reconfiguration message,
wherein the processing includes a process of establishing an NR PDCP for an SRB identifier included in the RRC connection reconfiguration message based on information that is included in the RRC connection reconfiguration message and indicates that the full configuration is applied and based on an inter-system handover performed by the terminal apparatus from an UTRA or an EPC to an E-UTRA or a 5GC.

3. A communication method for a terminal apparatus communicating with a base station apparatus, wherein a computer of the terminal apparatus comprises:
a reception process performed to receive an RRC connection reconfiguration message from the base station apparatus; and
a processing process performed to establish an NR PDCP for an SRB identifier included in the RRC connection reconfiguration message based on information that is included in the RRC connection reconfiguration message and indicates that a full configuration is applied and based on an inter-system handover performed by the terminal apparatus from an UTRA or an EPC to an E-UTRA or a 5GC.

4. A communication method for a base station apparatus communicating with a terminal apparatus, wherein a computer of the base station apparatus comprises:
a transmission process performed to transmit an RRC connection reconfiguration message to the terminal apparatus; and
a processing process performed to cause the terminal apparatus to perform processing by including information indicating that a full configuration is applied in the RRC connection reconfiguration message,
wherein the processing includes a process of establishing an NR PDCP for an SRB identifier included in the RRC connection reconfiguration message based on information that is included in the RRC connection reconfiguration message and indicates that the full configuration is applied and based on an inter-system handover performed by the terminal apparatus from an UTRA or an EPC to an E-UTRA or a 5GC.
